# EUROPEAN PATENT APPLICATION

(11) **EP 1 923 817 A1**
(43) Date of publication of application: **21.05.2008**
(21) Application number: 06076996.5
(22) Date of filing: 08.11.2006
(51) Int. Cl.: G06K 7/10

(54) **Modular RFID tag reader system**

(71) Applicant: Nehls, Reinhard, 46399 Bocholt (DE)
(72) Inventor: Nehls, Reinhard, 46399 Bocholt (DE); Caisley, Roy, 46419 Isselburg-Vehlingen (DE); Winkeler, Henrik, 53913 Swisstal (DE)
(74) Representative: Brookhuis, Hendrik Jan Arnold

(57) **Abstract**

A modular RFID tag reader system, which comprises a handheld RFID data acquisition unit having a housing which includes at least a handgrip for carrying the handheld unit by hand, a battery, electronic RFID data acquisition means, and a first handheld unit - antenna unit connector part.

The system further comprises an antenna unit, said antenna unit having a housing accommodating an antenna, said antenna unit having a second handheld unit - antenna unit connector part.

The first and second handheld unit - antenna unit connector parts are adapted to be mated so as to connect the antenna unit to the handheld RFID data acquisition unit and interconnect the antenna to the electronic RFID data acquisition means.

The system includes multiple antenna units having different designs, each of said antenna units having substantially identical second handheld unit - antenna unit connector parts such that selectively each of said antenna units can be connected to said handheld RFID data acquisition unit and used in combination therewith.

## Description

The present invention relates to an RFID tag reader system.

Application of the RFID technology has taken a rapid development in agriculture, specifically with regard to the management of livestock on a farm. It has become quite common, and in many countries an obligation, to provide animals with an RFID tag. Nowadays RFID tags have been proposed in many different forms and with many different options, not only to allow for identification of livestock, but also for purposes as process control and traceability. RFID tags are nowadays also available in embodiments that allow for storage and/or sensing of other data or biometric information of the animal. As is known in the field of livestock such a tag can be an eartag but other tags such as a collar tag, a subcutaneous tag, ingestable tag, etc, are known as well.

To read data from a RFID tag and possibly also to send data/instructions to an RFID tag presently mobile RFID tag readers as well as stationary RFID tag readers are known.

For example on a farm a mobile reader can be used in a stable or in the field to identify the animals. At the same time farms nowadays make use of equipment, e.g. feed station, milking station, weighing station, etc, wherein one or more stationary RFID tag readers are placed, e.g. to identify the animal that is milked.

In NL 8802483 an RFID reader system is disclosed wherein a handheld RFID data acquisition unit has a housing which includes at least the following parts:
a handgrip for carrying the handheld unit by hand,
a battery,
electronic RFID data acquisition means, and
a first handheld unit - antenna unit connector part.

Releasable connectable thereto is a lengthy stick antenna unit with an elongated housing accommodating an antenna. This antenna unit has a second handheld unit - antenna unit connector part. The first and second handheld unit - antenna unit connector parts are adapted to be mated so as to connect the antenna unit to the handheld RFID data acquisition unit and interconnect the antenna to the electronic RFID data acquisition means.

By disconnecting said handheld unit from the stick antenna the handheld unit can be easily carried along, e.g. into an office such as to transfer data from the handheld unit to a computer in said office.

In general commonly used antennas in this field are dipole antennas and loop antennas. Variations thereof are known as well.

A dipole antenna can be accommodated in an elongated housing, the length of which can very greatly from a short stick on the housing of the handheld unit to a lengthy housing which allows to bring the antenna at a location remote from the handheld unit to obtain better communication with the tag.

Loop antennas are nowadays commonly used in stationary applications, e.g. at one or both sides along a corridor through which animals pass. The loop design generally provides a greater read range than the dipole design antenna.

The applicant has found that present day RFID reader systems are unsatisfactory, both from a user as from a manufacturer point of view.

As mentioned before nowadays a farmer can choose from many different RFID tag reading systems, including "general purpose systems" as well as "specific use systems" as with the NL 8802483.

It has been found that on a farm many, and an ever increasing number of, different situations exists that require or would benefit from efficient reading of the tags. Presently available systems have shown to be non-optimal in this regard.

Also for a manufacturer the present systems are unsatisfactory, as many different systems have to be manufactured and inventory has to be kept.

To overcome one or more of the above drawbacks the present invention provides a modular RFID tag reader system according to the preamble of claim 1, wherein the system includes multiple antenna units having different designs, each of said antenna units having substantially identical second handheld unit - antenna unit connector parts such that selectively each of said antenna units can be connected to said handheld RFID data acquisition unit and used in combination therewith.

With a suitable embodiment of the inventive system the connector parts are embodied so as to establish a user detachable connection which allows the user to selectively combine a selected one of a group of multiple antenna units of the system with said handheld unit. A such it can be envisaged that the handheld unit is acquired by a user in combination with two or more different antennas, e.g. a short stick antenna, a long stick antenna and a loop antenna (possibly a loop antenna adapted to be mounted at a stationary location). Depending on the situation the user can then select the most optimal antenna unit and perform the reading and/or writing task (dependent on the embodiment of the tag).

In another suitable embodiment, more advantageous for the manufacturer than the end user, it is envisaged that the connector parts are embodied so as to establish a permanent connection upon mating of the parts, such that said connection is established by a system manufacturer or distributor, most prominently on demand of a specific system by an customer. This allows to reduce the inventory costs and also allows to design many different antennas for various applications with a more or less "universal" handheld unit.

It can also be envisaged that the system includes multiple handheld units, e.g. with different functionality (display, data entry, barcode reader, (contactless) communication with peripheral equipment, etc), all said handheld units having substantially identical first handheld unit - antenna unit connector parts.

The invention also relates to a preferred embodiment wherein a handheld unit is provided with an antenna unit having an annular housing, e.g. an oval or circular housing.

Preferably the annular housing surrounds an opening, and said annular housing and said handheld unit are adapted such that said handheld unit is mountable substantially within the opening of the annular housing or offset from the plane of the annular housing in the projection of said opening.

In a preferred embodiment the annular antenna housing and the handheld housing are adapted to be interconnected at spaced apart locations of the annular antenna housing, preferably at (diametrically) opposed locations along the annular antenna housing.

In a preferred embodiment the system includes a hand shield mountable on or integral with said handheld housing and/or said antenna housing so as to shield the hand holding the handheld housing, e.g. to prevent an animal engaging said hand.

In combination with an embodiment of the antenna housing as an annular housing and the handheld unit located within the opening thereof or at least in the projection of said opening, it is envisaged that the shield is a dome mountable on or integral with said annular antenna housing.

In a second aspect of the present invention a handheld RFID tag reader according to claim 18 is provided, having the advantages as explained herein, wherein both an embodiment allowing disconnection of the handheld unit and the annular antenna housing as an embodiment wherein the handheld unit housing and annular antenna housing are permanently integral are envisaged.

The invention will now be explained in detail referring to the drawings. In the drawings:
Figure 1 shows schematically a system according to the invention,
Figure 2 shows a preferred embodiment of the system according to the invention,
Figure 3 shows the system of figure 2 from another angle.

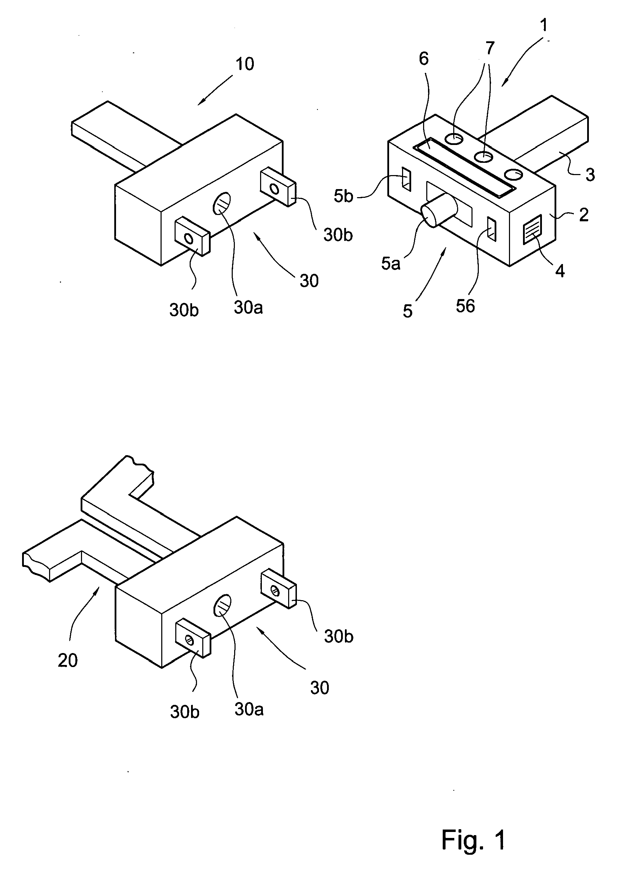

Figure 1 very schematically shows a version of a modular RFID tag reader system according to the invention. In figure 1 reference numeral 1 denotes a handheld RFID data acquisition unit having a housing 2 which includes at least the following parts:
a handgrip 3 for carrying the handheld unit by hand,
a battery (here within the housing), and
electronic RFID data acquisition means (here within the housing).

As noted before handheld RFID data acquisition units and the related technology, such as electronics for data acquisition and communication with the tag are well known and need no further explanation as to their internal design and operation.

It will be appreciated that the housing 2 and the handgrip 3 can have all sorts of external designs.

The handheld unit 1 here also has a display 6 and control members, e.g. buttons 7 or otherwise, to control the operation of the data acquisition means in the unit 1.

The handheld unit 1 also has a first handheld unit - antenna unit connector part 5, here at a top face of the housing 2.

The figure 1 also shows, in part and by way of example only, two distinct antenna units 10, 20 of different design. For instance unit 10 is a stick antenna unit and unit 20 a loop antenna unit.

Each antenna unit 10, 20 has a housing suitable for accommodating an antenna, here preferably a dipole antenna and a loop antenna respectively.

Also each antenna unit 10, 20 has a second handheld unit - antenna unit connector part 30. These second handheld unit - antenna unit connector parts 30 are substantially identical as will be explained below.

The first and second handheld unit - antenna unit connector parts 5, 30 are adapted to allow for the user of the system to mate a selected one of the antenna units 10, 20 with the handheld RFID data acquisition unit 1 and interconnect the antenna thereof to the electronic RFID data acquisition means in said unit 1.

As shown in this example the first and second handheld unit - antenna unit connector parts 5, 30 are each integral with the housing of the handheld unit 1 and housing of each antenna unit 10, 20 respectively and are adapted to establish a direct mechanical connection between said housings upon interconnection, such that as it were a singular housing is obtained and the mated antenna unit 10, 20 is carried along with the handheld unit 1 by the user.

In this example it is also shown that the connector parts 5, 30 both include one or more electrical connector members 5a, 30a and one or more mechanical connector members 5b, 30b, here as is preferred distinct from said electrical connector members 5a, 30a. Here, as is preferred, said connector parts form a snap connection.

In this example the connector part 30 includes two protrusions 30b on the housing of the antenna unit 10, 20 which are insertable into associated openings in the housing 2 of the handheld unit 1. A latch mechanism (not shown) in the housing 2 engages openings in said protrusions to effect a latching of the antenna housing. A push button 4 allows the user to release the latch and disconnect the antenna unit 10,20. So in general one could envisage a user operable latch mechanism to be provided, allowing to latch the antenna unit onto the handheld unit.

The electrical connector member 30a,b are here formed by a plug and socket type electrical connector.

It is suggested in figure 1 that the antenna unit 10 has an elongated housing (only part is shown), possibly in an embodiment with a telescopic elongated housing.

It is suggested in figure 1 that the antenna unit 20 has an annular housing (only part is shown).

As explained the system in figure 1 allows to user to use the handheld unit in combination with a number of antennas, so that the user can select a suitable antenna for each situation. As mentioned before it can be envisaged that multiple antennas are designed to be fitted to the handheld unit and then one can be selected and be operated as part of said handheld unit. On the other hand an antenna could also be a stationary mounted antenna to which the handheld unit is connected, when using the stationary antenna.

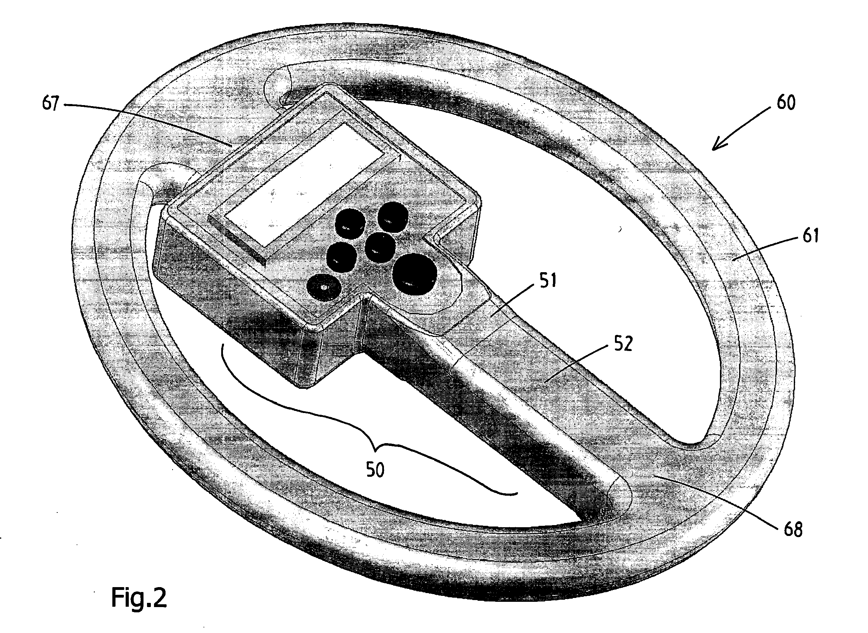

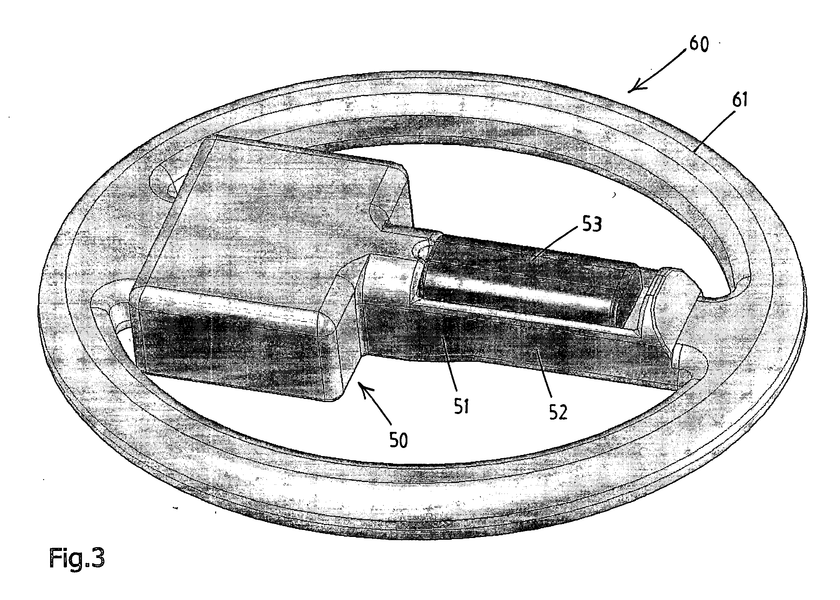

A preferred embodiment of a system of the invention is shown in figure 2 and 3.

In said system a handheld unit 50 and an antenna unit 60 are combined, wherein the antenna unit 60 has an annular housing 61 surrounding a central opening 62 therein. The handheld unit 50 is here located substantially within the opening 62 of the annular housing 61.

In this embodiment the annular antenna housing 61 and the handheld housing 51 are adapted to be interconnected at spaced apart locations of the annular housing 61, here at diametrically opposed locations so that the housing 51 essentially from a spoke extending across the wheel formed by the annular housing 61.

The housing 51 has a section embodied as a handgrip 52.

By this arrangement the handheld unit can be equipped with a housing 61 accommodating a large contour loop antenna, which allows to obtain a very attractive read range in combination with a handheld unit. Also ergonomically said design is attractive as the annular antenna housing 61 lies around the hand holding the entire system, which reduces stress on hand and/or arm of the user. In particular it is considered advantageous to arrange the battery 53 at the location of the handgrip 52 (see figure 3 with cover removed).

Also this arrangement of the annular antenna surrounding the handheld unit and handgrip thereof provides protection of the hand, e.g. against collision with farm equipment or against undesirable attempts of an animal to reach the hand.

In a further embodiment (not shown) the system further includes a hand shield mountable on or integral with said handheld housing and/or said antenna housing so as to shield the hand holding the handheld housing, e.g. to prevent an animal engaging said hand.

In the embodiment of figures 2,3 it is e.g. envisaged that the shield is a dome (preferably a transparent dome of suitable plastic material) mountable on or integral with said annular housing 61.

The shield could be transparent to allow the user to have his view not obscured.

In the embodiment shown here the annular housing is an oval but a circular or other annular shape is possible as well.

The figures 2,3 do not show the connector parts of the units 50, 60, but the skilled person will be able to construe mating connector parts with both mechanical and electrical antenna connection at the top end of the handheld unit 50 (here at 67), e.g. with and a mechanical connection only at the lower end of the unit 50 (here at 68).

It can also be envisaged the system as in figures 2,3 is embodied with a permanent interconnecting of the housings 51, 61, so as to be non-disconnectable by the user. As explained such a connection might be formed by suitable connector parts, wherein the manufacturer or distributor made the connection.

In another embodiment, there has not been made a "division" between a hand held unit and an antenna unit at the stage of production and the entire system is produced as a specific product.

As explained before the invention also envisages that the connector parts 5, 30 are embodied so as to establish a permanent connection upon mating of the parts, such that said connection is established by a system manufacturer or distributor (e.g. upon demand of a customer for a specific type of reader system).

This allows the manufacturer to apply a method for manufacturing a RFID tag reader system, wherein the method comprises:
manufacturing handheld RFID data acquisition units each having a housing which includes at least the following parts:
   a handgrip for carrying the handheld unit by hand,
   a battery,
   electronic RFID data acquisition means,
   a first handheld unit - antenna unit connector part,
manufacturing antenna units, each antenna unit having a housing accommodating an antenna, said antenna unit having a second handheld unit - antenna unit connector part,
wherein the first and second handheld unit - antenna unit connector parts are adapted to be mated so as to allow for connection of the antenna unit to the handheld RFID data acquisition unit and interconnect the antenna to the electronic RFID data acquisition means,
which method is characterised in that
the method includes manufacturing multiple antenna units having different designs, each of said antenna units having substantially identical second handheld unit - antenna unit connector parts such that selectively each of said antenna units can be connected to said handheld RFID data acquisition unit and used in combination therewith,
and wherein the method interconnecting a handheld unit with a specific antenna unit on demand of a customer.

When the connector parts are releasable by the user, this allows the user to interchange the antenna units 10, 20 dependent from the species of animal and/or animal location on said farm or other circumstances.

## Claims

1. Modular RFID tag reader system, said system comprising
a handheld RFID data acquisition unit having a housing which includes at least the following parts:
a handgrip for carrying the handheld unit by hand,
a battery,
electronic RFID data acquisition means,
a first handheld unit - antenna unit connector part,
an antenna unit, said antenna unit having a housing accommodating an antenna, said antenna unit having a second handheld unit - antenna unit connector part,
wherein the first and second handheld unit - antenna unit connector parts are adapted to be mated so as to connect the antenna unit to the handheld RFID data acquisition unit and interconnect the antenna to the electronic RFID data acquisition means,
**characterised in that**
said system includes multiple antenna units having different designs, each of said antenna units having substantially identical second handheld unit - antenna unit connector parts such that selectively each of said antenna units can be connected to said handheld RFID data acquisition unit and used in combination therewith.

2. System according to claim 1, wherein the first handheld unit - antenna unit connector part is integral with the housing of the handheld unit and wherein for at least one antenna unit of said system the second handheld unit - antenna unit connector part is integral with the housing of said antenna unit respectively, and wherein said connector parts are adapted to establish a mechanical connection between said housings, so as to obtain a singular housing allowing the antenna unit to carried along with the handheld unit.

3. System according to claim 1 or 2, wherein an antenna unit has an elongated housing, preferably accommodating a dipole antenna.

4. System according to claim 1 or 2, wherein an antenna unit has an annular housing, preferably accommodating a loop antenna.

5. System according to claim 4, wherein the antenna unit has an annular housing surrounding an opening, said annular housing and said handheld unit being adapted such that said handheld unit is mountable substantially within the opening of the annular housing.

6. System according to claim 5, wherein the annular housing and the handheld housing are adapted to be interconnected at spaced apart locations of the annular housing, preferably opposed locations.

7. System according to one or more of the preceding claims, wherein the system further includes a hand shield mountable on or integral with said handheld unit housing and/or said antenna unit housing so as to shield the hand holding the interconnected handheld and antenna unit housings, e.g. to prevent an animal engaging said hand.

8. System according to any of claims 4-6 and 7, wherein the shield is a dome mountable on or integral with said annular housing.

9. System according to one or more of claims 4-8, wherein said annular housing is an oval or circular housing.

10. System according to claim 3, wherein the elongated housing is telescopic.

11. System according to one or more of the preceding claims, further including an antenna housing which is adapted to be mounted at a stationary location.

12. System according to one or more of the preceding claims, wherein said handheld unit - antenna unit connector parts are embodied so as to establish a permanent connection upon mating of the parts, such that said connection is established by a system manufacturer or distributor.

13. System according to one or more of claims 1-11, wherein said handheld unit - antenna unit connector parts are embodied so as to establish a user detachable connection allow the user to selectively combine a selected one of a group of multiple antenna units of the system with said handheld unit.

14. Method for manufacturing a RFID tag reader system, wherein the method comprises:
manufacturing handheld RFID data acquisition units each having a housing which includes at least the following parts:
a handgrip for carrying the handheld unit by hand,
a battery,
electronic RFID data acquisition means,
a first handheld unit - antenna unit connector part,
manufacturing antenna units, each antenna unit having a housing accommodating an antenna, said antenna unit having a second handheld unit - antenna unit connector part,
wherein the first and second handheld unit - antenna unit connector parts are adapted to be mated so as to allow for connection of the antenna unit to the handheld RFID data acquisition unit and interconnect the antenna to the electronic RFID data acquisition means,
**characterised in that**
the method includes manufacturing multiple antenna units having different designs, each of said antenna units having substantially identical second handheld unit - antenna unit connector parts such that selectively each of said antenna units can be connected to said handheld RFID data acquisition unit and used in combination therewith,
and wherein the method interconnecting a handheld unit with a specific antenna unit on demand of a customer.

15. Method for use of a RFID tag reader system according to one or more of the preceding claims for animal identification on a farm, wherein the method comprises selecting an antenna unit from a group of antenna units of the system in dependency of the species of animal and/or animal location on said farm and interconnecting said antenna unit to the handheld unit.

16. Method according to claim 15, wherein on said farm one or more antenna units are arranged at a stationary location.

17. Method according to claim 15 or 16, wherein the system further includes one or more antenna units to be connected to said handheld unit so as to obtain a unitary handheld unit with antenna.

18. A handheld RFID tag reader comprising:
a loop antenna accommodated in an annular housing part, said housing part surrounding an opening,
an RFID data acquisition unit having a housing part which includes a handgrip for carrying the handheld unit by hand and electronic RFID data acquisition means, and preferably a battery within said data acquisition housing part,
wherein said antenna housing part and data acquisition housing part are connected, possibly releasable connected,
and wherein
the data acquisition housing part is arranged or arrangable within the opening of the annular antenna housing or offset from said opening in the projection of said opening.

19. A tag reader according to claim 18, wherein the annular antenna housing and the data acquisition housing are interconnected at spaced apart locations of the annular antenna housing, preferably at diametrically opposed locations.

20. A tag reader according to claim 18 or 19, wherein the reader further includes a hand shield mountable on or integral with said handheld housing and/or said antenna housing so as to shield the hand holding the handheld housing, e.g. to prevent an animal engaging said hand.
